(19) Europäisches Patentamt
European Patent Office
Office européen des brevets

(11) **EP 1 435 342 B1**

(12) **FASCICULE DE BREVET EUROPEEN**

(45) Date de publication et mention de la délivrance du brevet:
**03.11.2010 Bulletin 2010/44**

(51) Int Cl.:
**C03B 37/025** (2006.01)  **C03B 37/03** (2006.01)

(21) Numéro de dépôt: **03293068.7**

(22) Date de dépôt: **08.12.2003**

(54) **Procédé et installation de contrôle de la dispersion modale de polarisation d'une fibre optique lors du fibrage**

Verfahren und Vorrichtung zur Regelung der Polarisationsmodendispersion einer optischen Faser während des Ziehens

Process and apparatus for controlling the polarisation mode dispersion of an optical fibre during drawing

(84) Etats contractants désignés:
**AT BE BG CH CY CZ DE DK EE ES FI FR GB GR HU IE IT LI LU MC NL PT RO SE SI SK TR**

(30) Priorité: **31.12.2002 FR 0216890**

(43) Date de publication de la demande:
**07.07.2004 Bulletin 2004/28**

(73) Titulaire: **Draka Comteq B.V.**
**1083 HJ Amsterdam (NL)**

(72) Inventeurs:
• **Lainet, Eric**
**78600 Maison Laffitte (FR)**
• **Hayrault, Frédéric**
**95670 Marly La Ville (FR)**
• **Coelho, Daniel**
**95280 Jouy-le-Moutier (FR)**

(74) Mandataire: **Blokland, Arie**
**Algemeen Octrooi- en Merkenbureau**
**P.O. Box 645**
**5600 AP Eindhoven (NL)**

(56) Documents cités:
EP-A- 1 258 751    EP-A1- 0 907 617
WO-A-00/69782

**Description**

La présente invention concerne les fibres optiques et plus précisément la réduction de la dispersion modale de polarisation lors de la fabrication de telles fibres.

Dans une fibre optique monomode idéalement circulaire existent deux modes propres de polarisation; si la fibre est circulaire, ces deux modes se propagent le long de la fibre avec des vitesses de phase identiques. Toutefois, une asymétrie de la fibre, par exemple provoquée par un coeur non circulaire, des contraintes latérales asymétriques ou encore des variations d'indice induit une différence entre les vitesses de phase des deux modes propres, appelée biréfringence. La biréfringence d'une fibre est mesurée par un paramètre appelé dispersion modale de polarisation, qui est représentatif de la dispersion induite dans un signal par la biréfringence de la fibre. Ce problème de défaut de cylindricité des fibres optiques se pose non seulement pour les fibres optiques monomodes, comme on vient de l'expliquer, mais peut aussi se poser pour d'autres types de fibres optiques.

EP-B-0 582 405 décrit une installation classique de fibrage, dans laquelle une préforme est chauffée à son extrémité; l'extrémité chauffée de la préforme est étirée pour formée une fibre optique. L'installation comporte divers postes, pour le contrôle du diamètre, l'application d'un revêtement, le contrôle de la concentricité et de l'épaisseur du revêtement, le durcissement du revêtement. La fibre est enroulée sur des poulies et entraînée par un cabestan de tirage, avant d'être enroulée sur une bobine ou tambour. Ce document propose, pour réduire la dispersion modale de polarisation, qu'une des poulies de guidage de la fibre soit animée d'un mouvement alternatif de rotation autour d'un axe compris dans le plan de fibrage. Ce mouvement d'oscillation a pour effet de faire rouler la fibre sur la surface de la poulie, de part et d'autre du plan de fibrage défini par l'axe de la préforme et la fibre. Ce mouvement latéral de la fibre induit une torsion dans la fibre en cours d'étirement et une déformation permanente. L'alternance dans le mouvement de la poulie a pour effet d'appliquer à la fibre des torsions dans des directions alternantes, ce qui réduit la dispersion modale de polarisation. EP-A-0 744 636 propose une solution permettant d'éviter le mouvement alternatif de la poulie; ce document propose d'utiliser une poulie présentant une surface gauche, avec un simple mouvement de rotation. En rotation, la poulie gauche présente à la fibre une surface équivalente à celle d'une roue à symétrie de révolution dont l'axe est animé d'un mouvement alternatif.

WO-A-98 46536 décrit un autre système d'application de la torsion à la fibre. Des éléments sont en contact avec la fibre, de part et d'autre de celle-ci. Un des éléments est animé d'un mouvement alternatif.

Un problème présenté par cette solution est celui de la détermination de la torsion appliquée à la fibre, ou de la rotation de la fibre sur le dispositif oscillant. Ce problème est d'autant plus complexe que la fibre présente une dimension typique de l'ordre de 250 $\mu$m, une forme cylindrique et est étirée à des vitesses qui peuvent atteindre 1500 m/min.

WO-A-01 33184 indique qu'il est connu d'introduire dans la fibre des bulles ou autres irrégularités. Il est alors possible, pour un réglage donné du mouvement d'oscillation de la poulie, de mesurer sur la fibre étirée la torsion appliquée. Un tel procédé implique toutefois d'étirer la fibre avant de pouvoir procéder aux mesures. Il conduit à des pertes de temps et de fibre. En outre, il implique une nouvelle mesure à chaque changement des caractéristiques du dispositif d'étirage - préforme, type de revêtement, vitesse de fibrage, etc. Enfin, la mesure n'est pas effectuée sur la fibre, mais sur une préforme spécifique, ce qui pose un problème de reproductibilité du procédé.

WO-A-01 33184 propose aussi de mesurer le diamètre de la fibre et de calculer une transformation de Fourier du diamètre. Le spectre de puissance correspondant présente des pics à une fréquence 2v, avec v la fréquence d'inversion de l'oscillation de la poulie. L'amplitude de la torsion est obtenue à partir du spectre, par un calcul d'amplitude des pics du spectre. Cette solution suppose de disposer d'un appareil de mesure précise du diamètre de la fibre et de moyens de calcul élaborés. Cette solution est aussi limitée par principe même à des oscillations périodiques du système anti dispersion modale de polarisation.

EP 1 258 751 décrit une méthode de fabrication d'une fibre optique, ledit procédé comprenant les étapes de la préparation d'une préforme de fibre optique et en tirant partie de préforme de fibre optique ainsi préparé en chauffant une partie de celle-ci; où une condition de dessin est modifiée au moment du dessin tels qu'au moins une première partie présentant une dispersion chromatique positive à un niveau prédéterminé de longueurs d'onde dans une bande de longueur d'onde dans l'utilisation et au moins une deuxième portion présentant une dispersion négative au niveau de ladite longueur d'onde prédéterminée sont alternativement formées selon une direction longitudinale, et une partie prédéterminée de ladite fibre optique obtenue par ledit dessin est fourni avec une torsion.

WO 02/32820 décrit une méthode de fabrication d'une fibre optique avec une variation de la dispersion sur toute la longueur de la fibre optique, comprenant: la tension d'une fibre optique tirée d'un verre de tirer à blanc, et fournir de la chaleur localisée à la fibre optique comme il est tiré, passé d'une région, où la chaleur localisée est périodiquement modifiée pour produire la variation de la dispersion de la fibre optique.

Il existe donc un besoin d'une solution permettant de contrôler la dispersion modale de polarisation d'une fibre optique lors de son étirage à partir d'une préforme. Une telle solution devrait être simple à mettre en oeuvre, fiable et ne pas nécessiter de préforme spécifique. Il devrait aussi pouvoir être mis en oeuvre en temps réel ou quasiment en temps réel, sans impliquer de mesures complexes ou de calculs complexes et pour tous les types d'oscillation du système anti dispersion modale de polarisation.

Dans un mode de réalisation, l'invention propose en conséquence un procédé de contrôle de la dispersion modale de polarisation d'une fibre optique lors du fibrage, comprenant :

- l'application à la fibre d'une torsion par déplacement de la fibre par rapport à une pièce ;
- la prise d'au moins une image de la fibre et de la pièce;
- l'analyse de l'image pour déterminer la position de la fibre par rapport à la pièce,
- le calcul de la torsion appliquée à la fibre à partir de la position déterminée, et
- L'ajustement des paramètres de mouvement de la pièce pour contrôler la dispersion modale de polarisation, si nécessaire.

Dans un mode de mise en oeuvre, l'étape d'application comprend le déplacement en rotation de la pièce par rapport à la fibre et l'étape d'analyse comprend la détermination de la position angulaire de la fibre par rapport à la pièce. L'étape d'application comprend avantageusement le déplacement périodique de la pièce. On peut alors prévoir que l'étape de prise d'image s'effectue périodiquement, avec une période différente de celle du déplacement de la pièce.

Dans un mode de mise en oeuvre, l'étape de calcul s'effectue par calcul du nombre de tours dont la fibre roule sur la pièce. Dans ce cas, l'étape de calcul peut comprendre le calcul de la position moyenne de la fibre par intégration des positions.

L'invention propose encore une installation d'étirage d'une fibre optique, comprenant

- une pièce en déplacement, le déplacement de la pièce appliquant une torsion à la fibre;
- un capteur d'image adapté à capter des images de la fibre et de la pièce;
- un circuit d'analyse des images captées adapté à déterminer la position de la fibre par rapport à la pièce et à calculer à partir de la position déterminée la torsion appliquée à la fibre.
- des moyens pour ajuster les paramètres de mouvement de la pièce (10).

Dans un mode de réalisation, la pièce est une poulie animée d'un mouvement oscillant.

Avantageusement, le capteur d'images est adapté à capter une image de la fibre et de la poulie au voisinage du point médian de contact entre la fibre et la poulie.

D'autres caractéristiques et avantages de l'invention apparaîtront à la lecture de la description qui suit de modes de réalisation, donnés à titre d'exemple et en référence aux dessins, qui montrent :

- figure 1, une vue schématique d'une installation dans laquelle l'invention est mise en oeuvre;
- figure 2 et 3, des représentations schématiques des images captées dans l'installation de la figure 1, à des instants différents;
- figure 4, un schéma de principe des vitesses de la fibre et de la poulie;
- figure 5, un ordinogramme du procédé de l'invention.

L'invention propose de capturer des images de la fibre sur la poulie de l'installation de fibrage ou d'étirage qui limite la dispersion modale de polarisation, de déterminer la position de la fibre par rapport à la poulie et ensuite de déduire la rotation appliquée à la fibre à partir des images obtenues. L'analyse des images permet de connaître avec précision la position de la fibre sur la poulie et donc l'angle formé entre la fibre et la poulie. On peut donc en déduire la torsion appliquée à la fibre. Le procédé n'implique pas de matériel particulier pour l'étalonnage et peut être mis en oeuvre en continu au cours de la production de fibre. Il n'implique pas de calculs complexes et s'applique à tous les types de mouvements d'oscillation.

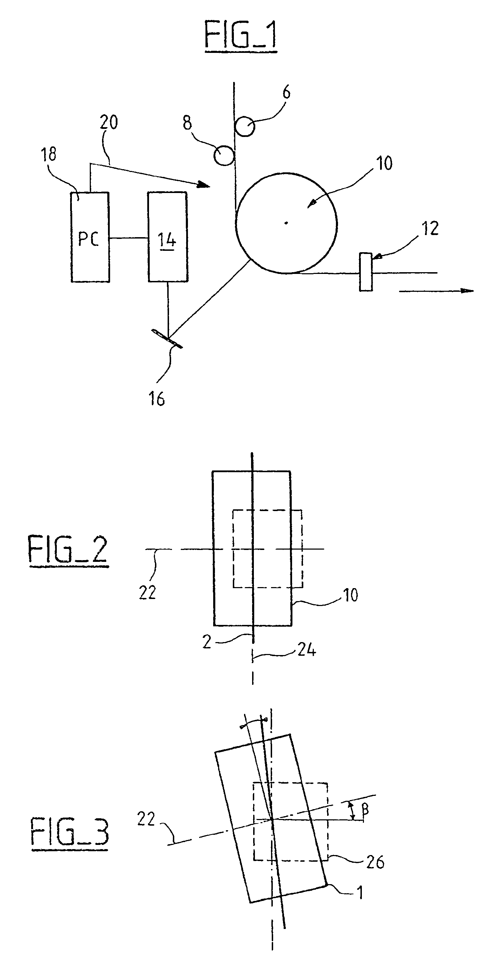

Dans la suite, on décrit un exemple de mise en oeuvre du procédé dans une installation utilisant une poulie oscillante. La figure 1 est une vue schématique d'une installation dans laquelle l'invention est mise en oeuvre; n'y sont représentés que les éléments nécessaires à la compréhension de l'invention. La figure montre la fibre 2 en cours de fibrage, le sens de déplacement de cette fibre étant symbolisé par la flèche 4. Deux poulies de guidage 6, 8 assurent le guidage de la fibre avant qu'elle n'atteigne la poulie oscillante 10. Cette poulie oscillante est animée d'un mouvement alternatif de rotation autour de l'axe d'arrivée de la fibre - qui est vertical sur la figure. Ce mouvement présente typiquement une fréquence de quelques Hz pour un système de fibrage fonctionnant à une vitesse typiquement comprise entre 200 et 1800 m/min, avec un angle de déplacement maximal pouvant typiquement atteindre $\pm9°$ par rapport au plan de fibrage. Comme expliqué plus haut en référence au document EP-B-0 582 405, le mouvement oscillant de la poulie provoque une torsion dans la fibre, dans des sens de rotation alternés, ce qui a pour effet de diminuer la dispersion modale de polarisation. En sortie de la poulie 10, la fibre est guidée par des doigts 12, puis elle passe sur le dispositif d'entraînement avant d'être enroulée de façon connue en soi.

L'invention repose sur le fait que la torsion appliquée à la fibre en cours d'étirage est fonction de la position de la fibre 2 sur la poulie oscillante 10; ainsi, la mesure de la position de la fibre permet de déterminer, comme expliqué maintenant, la torsion appliquée à la fibre. La figure montre donc un capteur d'image 14. Le capteur est adapté à fournir une image de la fibre sur la poulie; on peut utiliser pour faciliter la mise en place du capteur des moyens optiques, comme le miroir 16 de la figure, qui renvoie vers le capteur l'image de la fibre sur la poulie. Les images fournies par le capteur 14 sont transmises à un circuit d'analyse 18.

Le capteur d'images est par exemple une caméra haute fréquence, qui capte les images avec une fréquence de 100 images par seconde. Une telle fréquence permet de disposer d'au moins 20 images de la fibre sur la poulie pour chaque cycle de la poulie oscillante et de déterminer le mouvement de la fibre sur la poulie oscillante. Le nombre d'images pour chaque cycle de la poulie oscillante dépend de la nature du mouvement de la poulie; pour un mouvement simple de la poulie, i! peut suffire de moins d'images pour chaque cycle de la poulie.

Pour des oscillations périodiques, on peut aussi utiliser une caméra capturant les images à une fréquence d'acquisition proche de la fréquence du mouvement oscillant de la poulie. Dans ce cas, le mouvement de la fibre est reconstitué à partir des images de la fibre sur plusieurs périodes successives. A titre d'exemple, on peut prévoir un décalage de 0,1 Hz entre la fréquence d'acquisition de la caméra et la fréquence des oscillations de la poulie. Ainsi, pour un déplacement de la poulie à une fréquence de 4,5 Hz, on obtient sur 45 cycles de la poulie un balayage complet du mouvement de la fibre, par 45 images de la fibre à différents moments du mouvement de la poulie. Cette solution permet d'utiliser pour la capture des images un capteur fonctionnant à une fréquence plus faible. La fiabilité des mesures peut être affectée par les vibrations dans l'installation; les essais menés par les inventeurs montrent que les mesures restent exploitables.

Les images fournies par le capteur d'images sont transmises au circuit d'analyse, dans lequel elles sont analysées pour déterminer la position de la fibre sur la poulie. Le circuit d'analyse est par exemple constitué d'un micro-ordinateur du type PC, muni d'un port de réception des images fournies par le capteur d'images et d'un logiciel de reconnaissance de forme, comme le logiciel vendu sous la marque Labview. Ce logiciel est programmé pour déterminer dans une image la position de la fibre par rapport à poulie oscillante, plus précisément l'angle entre la poulie et la fibre. On peut aussi utiliser un logiciel de traitement d'image.

Il est avantageux de mesurer la position de la fibre sur la poulie dans la position représentée à la poulie, à l'intersection de la surface de la fibre avec la bissectrice des directions de la fibre avant et après la poulie. Ce point est le point médian de contact entre la fibre et la poulie. Il présente, par rapport à d'autres points de mesure possible, l'avantage que la position de la fibre est moins dépendante des vibrations éventuelles de la fibre de part et d'autre de la poulie.La position de la fibre par rapport à la poulie est représentative de la torsion appliquée à la fibre.

Les figures 2 et 3 montrent des représentations schématiques des images captées dans l'installation de la figure 1. La figure 2 montre la position de la poulie pour un angle d'oscillation nul; la figure 3 montre la position de la poulie pour un angle d'oscillation maximal de la poulie. Sur les figures, la référence 10 représente la poulie et la référence 22 désigne l'axe de rotation de la poulie pour l'entraînement de la fibre 2. La référence 24 désigne le plan de fibrage. L'axe d'oscillation de la poulie forme un angle de 45° par rapport au plan des figures 2 et 3. La référence 26 représente les contours de l'image captée par le capteur d'image 14.

Sur la figure 2, la poulie forme un angle nul avec le plan de fibrage 24, qui est dans cette position confondu avec le plan médian de la poulie. L'angle $\alpha$ entre la poulie et la fibre est nul. Cette position correspond à la position d'une poulie d'un système classique, sans mouvement d'oscillation de la poulie pour réduire la dispersion modale de polarisation. Sur la figure 3, la poulie a tourné d'un angle $\beta$ dans son mouvement d'oscillation. La fibre s'est déplacée par rapport à la poulie, de sorte que la fibre forme avec la poulie - avec le bord ou le plan médian de la poulie - un angle $\alpha$. La référence 24 sur la figure 3 montre encore l'image capturée par le capteur d'images 14. On comprend que cette image permet de mesurer l'angle $\alpha$, en reconnaissant la fibre 2 sur l'image et en connaissant l'angle d'oscillation de la poulie ou en déterminant à partir de l'image la position de la poulie par rapport à la fibre.

La détermination de cet angle est représentative du nombre de tours dont la fibre a roulé sur la surface de la poulie et est donc représentative de la torsion appliquée à la fibre. La torsion peut être calculée en appliquant la formule suivante:

$$V = \frac{\cos(\alpha).\sin(\alpha)}{\pi.d}$$

qui donne en tr/m la torsion appliquée à la fibre, d étant le diamètre de la fibre circulant sur la poulie en m.

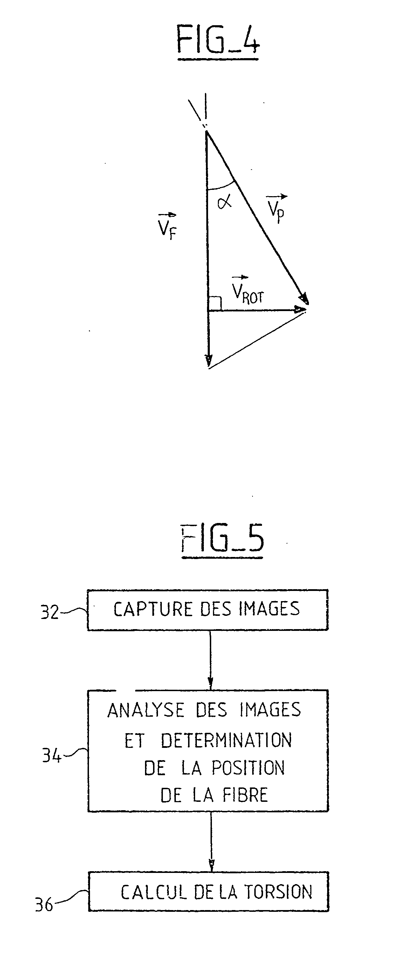

La figure 4 montre un schéma de principe des vitesses de la fibre et de la poulie, pour expliquer la formule ci-dessus. On a représenté à la figure l'axe 28 de la fibre et le plan médian 30 de la poulie. La figure montre la vitesse $V_F$ de la fibre, la vitesse $V_P$ à la surface de la poulie ainsi que la vitesse de rotation $V_{ROT}$ de la fibre ou vitesse transversale de la fibre. La figure montre l'angle $\alpha$ entre la vitesse de la fibre et la vitesse de la poulie. La vitesse $V_P$ de rotation de la poulie autour de son axe de rotation correspond à la composante dans le plan médian de la poulie de la vitesse $V_F$ de la fibre, ce qui donne $V_P = V_F.\cos\alpha$. La vitesse transversale de la fibre est impartie à la fibre par le mouvement relatif de la poulie et correspond donc à la composante orthogonale à la direction de la fibre de la vitesse $V_P$ de la poulie. On a donc

$$V_{ROT} = V_P.sin\alpha = V_F.sin\alpha.cos\alpha.$$

Il est habituel de mesure la torsion instantanée en terme de nombre de tour par mètre de fibre. La torsion ou vitesse en tr/m s'écrit donc

$$V = \frac{V_{ROT}}{\pi.d.V_F} = \frac{cos(\alpha).sin(\alpha)}{\pi.d}$$

Dans le cas d'un mouvement périodique, on peut calculer pour une demie période - pour un mouvement de la fibre sur un côté du plan de fibrage - l'angle moyen et en déduire la valeur moyenne $V_M = sin\alpha_M.cos\alpha_M/\pi d$ de la torsion dans un des sens de rotation de la fibre.

Pour déterminer l'angle $\alpha_M$, on peut déterminer à partir des images le graphe de la fonction associant le temps à l'angle $\alpha$, approximer cette fonction par un polynôme d'ordre 2, 3 ou 4, puis calculer l'intégrale de la fonction sur une demie période. Ce procédé est particulièrement adapté, dans la mesure où l'approximation polynomiale permet de pallier des erreurs dans l'analyse d'une image ou des vibrations au moment d'une des prises d'image.

Des essais ont été menés avec une installation de fibrage du type représenté à la figure 1. Dans un premier cas, on applique une vitesse de fibrage de 600 m/min, une fréquence d'oscillation de la poulie de 4,5 Hz et un angle d'oscillation de $\pm$ 8°. Cette configuration donne classiquement une vitesse de rotation moyenne de la fibre de 6 tr/min. L'application du procédé permet de retrouver cette valeur, avec capture d'images à une fréquence de 4,6 Hz et une analyse sur des images correspondant à une demi période. Dans le deuxième cas, on appliquait une vitesse de fibrage de 600 m/min, une fréquence d'oscillation de la poulie de 4,5 Hz et un angle d'oscillation de $\pm6°$. Cette configuration donne classiquement une vitesse de rotation de la fibre de 4,3 tr/min. L'application du procédé décrit en référence aux figures fournit encore cette valeur.

L'analyse des images dans le circuit d'analyse 18 des images fournies par le capteur d'images 14 permet ainsi de déterminer la torsion appliquée à la fibre. Il est alors possible, en temps réel ou quasiment en temps réel, d'ajuster les paramètres d'oscillation de la poulie oscillante - notamment la fréquence d'oscillation ou l'amplitude d'oscillation. L'ajustement de ces paramètres est représenté à la figure par la flèche 20 reliant le circuit d'analyse 18 et la poulie oscillante.

La figure 5 est un ordinogramme du procédé de l'invention. On a représenté en 32 la prise d'images de la fibre. L'étape 34 est une étape d'analyse des images pour déterminer la position de la fibre. L'étape 36 est une étape de calcul de la torsion à partir de la position déterminée à l'étape 34.

Le procédé décrit en référence à la figure 1 a l'avantage de pouvoir s'appliquer non seulement à une poulie oscillante, comme dans l'exemple de la figure, mais plus généralement à tout système de réduction de la dispersion modale de polarisation, comme ceux de l'état de la technique mentionnés plus haut. Il peut être utilisé pour un mouvement triangulaire de la poulie - c'est-à-dire pour un mouvement à vitesse angulaire constante sur chaque demie période d'oscillation; il s'applique aussi à des mouvements autres, par exemple des oscillations sinusoïdales. A l'inverse des solutions proposées dans l'état de la technique, le procédé s'applique au cours de la fabrication de la fibre, sans qu'il ne soit nécessaire d'étalonner l'appareil de fibrage avec une préforme spécifique. Il en résulte une économie de temps et de moyens, ainsi qu'une plus grande fiabilité des résultats obtenus.

Le procédé permet aussi de visualiser la vitesse de rotation moyenne de la fibre, ce qui permet de contrôler en temps réel le mouvement d'oscillation; il permet aussi de déterminer l'évolution de la vitesse de rotation sur une ou plusieurs périodes de fonctionnement du système de réduction de la dispersion modale de polarisation. Ces informations peuvent être utilisées non seulement pour régler ce système de réduction, mais aussi pour le suivi de l'alignement de l'équipement.

Bien entendu, l'invention n'est pas limitée aux exemples de réalisation mentionnés plus haut; ainsi elle s'applique à une configuration différente de l'appareil de fibrage. On pourrait aussi appliquer l'invention à des mouvements autres qu'un mouvement oscillant en rotation de la poulie, comme un mouvement alternatif en translation; dans ce cas, la formule ci-dessus pourrait être adaptée, la rotation pouvant être calculée en divisant le déplacement horizontal du rouleau par rapport à la fibre par la circonférence de la fibre. La pièce appliquant la torsion à la fibre n'est pas limitée à une poulie mais peut présenter une autre forme. On peut pour la prise des images comme pour leur analyse utiliser des techniques autres que celles mentionnées dans les exemples. Le procédé s'applique non seulement à des mouvements périodiques, mais aussi à des systèmes anti dispersion modale de polarisation avec des mouvements apériodiques ou pseudo-périodiques.

Liste des références

| 2 | fibre | 4 | sens déplacement | 6 | poulie de guidage |
|---|---|---|---|---|---|
| 8 | poulie de guidage | 10 | poulie oscillante | 12 | doigts de guidage |
| 14 | capteur d'images | 16 | miroir | 18 | circuit d'analyse |
| 20 | flèche | 22 | axe poulie | 24 | plan de fibrage |
| 26 | contour image | 28 | axe de la fibre | 30 | plan médian de la poulie |
| 32 | prise d'images | 34 | analyse des images | 36 | calcul de la torsion |

**Revendications**

1. Un procédé de contrôle de la dispersion modale de polarisation d'une fibre optique (2) lors du fibrage, comprenant :

   - l'application à la fibre (2) d'une torsion par déplacement de la fibre par rapport à une pièce (10), **caractérisé en ce que** le procédé comprend
   - la prise d'au moins une image (24) de la fibre (2) et de la pièce (10);
   - l'analyse de l'image pour déterminer la position de la fibre (2) par rapport " à la pièce (10),
   - le calcul de la torsion appliquée à la fibre (2) à partir de la position déterminée, et
   - L'ajustement des paramètres de mouvement de la pièce (10) pour contrôler la dispersion modale de polarisation, si nécessaire.

2. Le procédé de la revendication 1, **caractérisé en ce que** l'étape d'application comprend le déplacement en rotation de la pièce (10) par rapport à la fibre (2) et **en ce que** l'étape d'analyse comprend la détermination de la position angulaire de la fibre (2) par rapport à la pièce (10).

3. Le procédé de la revendication 1 ou 2, **caractérisé en ce que** l'étape d'application comprend le déplacement périodique de la pièce (10).

4. Le procédé de la revendication 3, **caractérisé en ce que** l'étape de prise d'image s'effectue périodiquement, avec une période différente de celle du déplacement de la pièce.

5. Le procédé de l'une des revendicalions 1 à 4, **caractérisé en ce que** l'étape de calcul s'effectue par calcul du nombre de tours dont la fibre (2) roule sur la pièce (10).

6. Le procédé de la revendication 5, **caractérisé en ce que** l'étape de calcul comprend le calcul de la position moyenne de la fibre par intégration des positions.

7. Une installation d'étirage d'une fibre optique (2), comprenant

   - une pièce (10) en déplacement, le déplacement de la pièce appliquant une torsion à la fibre (2), **caractérisé en ce que** l'installation comprend
   - un capteur d'image (14) adapté à copier des images de la fibre (2) et de la pièce (10);
   - un circuit d'analyse (18) des images copiées adapté à déterminer la position de la fibre (2) par rapport à la pièce et à calculer à partir de la position déterminée la torsion appliquée à la fibre (2);
   - des moyens pour ajuster les paramètres de mouvement de la pièce (10).

8. L'installation de la revendication 7, **caractérisée en ce que** la pièce (10) est une poulie animée d'un mouvement oscillant.

9. L'installation de la revendication 8, **caractérisée en ce que** le capteur d'images (14) est adapté a copier une image de la fibre (2) et de la poulie (10) au voisinage du point médian de contact entre la fibre et la poulie.

**Claims**

1. A method of controlling the polarisation mode dispersion of an optical fibre (2) during drawing-out, including:

   - application of a torque to the fibre (2) by displacement of the fibre relative to a member (10), **characterised in that** the method includes
   - taking at least one image (24) of the fibre (2) and the member (10);
   - analysis of the image to determine the position of the fibre (2) relative to the member (10),
   - calculation of the torque applied to the fibre (2) based on the determined position, and
   - adjustment of the movement parameters of the member (10) for controlling the polarisation mode dispersion, if necessary.

2. The method of claim 1, **characterised in that** the application step includes rotational displacement of the member (10) relative to the fibre (2), and **in that** the analysis step includes determination of the angular position of the fibre (2) relative to the member (10).

3. The method of claim 1 or 2, **characterised in that** the application step includes the periodic displacement of the member (10).

4. The method of claim 3, **characterised in that** the image-taking step is performed periodically, with a different period to that of the displacement of the member.

5. The method of one of claims 1 to 4, **characterised in that** the calculation step is performed by calculation of the number of turns through which the fibre (2) rolls on the member (10).

6. The method of claim 5, **characterised in that** the calculation step includes calculation of the average position of the fibre by integration of the positions.

7. An installation for drawing out an optical fibre (2), including

   - a member (10) arranged to be displaced, the displacement of the member applying a torque to the fibre (2), **characterised in that** the installation includes
   - an image-capturing means (14) arranged to capture images of the fibre (2) and the member (10);
   - a circuit (18) for analysis of the captured images, which is arranged to determine the position of the fibre (2) relative to the member and to calculate the torque applied to the fibre (2) based on the position determined;
   - means for adjusting the movement parameters of the member (10).

8. The installation of claim 7, **characterised in that** the member (10) is a pulley arranged to undergo an oscillating movement.

9. The installation of claim 8, **characterised in that** the image-capturing means (14) is arranged to capture an image of the fibre (2) and pulley (10) in the vicinity of the mid-point of contact between the fibre and the pulley.

**Patentansprüche**

1. Verfahren zur Steuerung der modalen Polarisationsdispersion einer optischen Faser (2) während des Faserziehens, umfassend:

   - die Anwendung einer Torsion auf die Faser (2) durch Bewegen der Faser bezüglich eines Teils (10), **dadurch gekennzeichnet, dass** das Verfahren umfasst:
   - das Aufnehmen mindestens eines Bildes (24) der Faser (2) und des Teils (10);
   - die Analyse des Bildes zum Bestimmen der Position der Faser (2) bezüglich des Teils (10),
   - die Berechnung der auf die Faser (2) angewendeten Torsion ausgehend von der bestimmten Position, und

- die Anpassung von Bewegungsparametern des Teils (10) zum Steuern der modalen Polarisationsdispersion, falls nötig.

2. Verfahren nach Anspruch 1, **dadurch gekennzeichnet, dass** der Schritt der Anwendung das rotative Bewegen des Teils (10) bezüglich der Faser (2) umfasst, und dass der Schritt der Analyse die Bestimmung der Winkelposition der Faser (2) bezüglich des Teils (10) umfasst.

3. Verfahren nach Anspruch 1 oder 2, **dadurch gekennzeichnet, dass** der Schritt des Anwendens die periodische Bewegung des Teils (10) umfasst.

4. Verfahren nach Anspruch 3, **dadurch gekennzeichnet, dass** der Schritt des Aufnehmens des Bildes periodisch durchgeführt wird, mit einer Periode, welche unterschiedlich zu derjenigen der Bewegung des Teils ist.

5. Verfahren nach einem der Ansprüche 1 bis 4, **dadurch gekennzeichnet, dass** der Schritt der Berechnung durch Berechnung einer Anzahl von Umdrehungen durchgeführt wird, die die Faser (2) auf dem Teil (10) rollt.

6. Verfahren nach Anspruch 5, **dadurch gekennzeichnet, dass** der Schritt der Berechnung die Berechnung der mittleren Position der Faser durch Integration der Positionen umfasst.

7. Einrichtung zum Ziehen einer optischen Faser (2), umfassend

- ein Teil (10) in Bewegung, wobei die Bewegung des Teils eine Torsion auf die Faser (2) anwendet, **dadurch gekennzeichnet, dass** die Einrichtung umfasst:
- einen Bildaufnehmer (14), welcher eingerichtet ist, Bilder der Faser (2) und des Teils (10) aufzunehmen,
- eine Schaltung zur Analyse (18) der aufgenommenen Bilder, welche eingerichtet ist, die Position der Faser (2) bezüglich des Teils zu bestimmen und ausgehend von der bestimmten Position die auf die Faser (2) angewendete Torsion zu berechnen;
- Mittel zum Anpassen der Bewegungsparameter des Teils (10).

8. Einrichtung nach Anspruch 7, **dadurch gekennzeichnet, dass** das Teil (10) eine von einer Oszillationsbewegung angetriebene Rolle ist.

9. Einrichtung nach Anspruch 8, **dadurch gekennzeichnet, dass** der Bildaufnehmer (14) eingerichtet ist, ein Bild der Faser (2) und der Rolle (10) benachbart zum Mittelpunkt des Kontakts zwischen der Faser und der Rolle aufzunehmen.

## FIG_1

6

8

20

18

10

PC    14    12

16

## FIG_2

22

10

2

24

## FIG_3

22

β

26

1

## FIG_4

## FIG_5

32 — CAPTURE DES IMAGES

34 — ANALYSE DES IMAGES ET DETERMINATION DE LA POSITION DE LA FIBRE

36 — CALCUL DE LA TORSION

**EP 1 435 342 B1**

## RÉFÉRENCES CITÉES DANS LA DESCRIPTION

**Documents brevets cités dans la description**

- EP 0582405 B
- EP 0744636 A
- WO 9846536 A

- WO 0133184 A
- EP 1258751 A
- WO 0232820 A